# EUROPEAN PATENT APPLICATION

(11) **EP 1 870 626 A2**
(43) Date of publication of application: **26.12.2007**
(21) Application number: 07445025.5
(22) Date of filing: 19.06.2007
(51) Int. Cl.: F16L 47/03, B29C 65/34

(54) **Welding sleeve and method for joining such a welding sleeve to at least one plastic pipe**

(30) Priority: 20.06.2006 SE 0601356
(71) Applicant: KUNGSÖRS PLAST AB, 736 22 Kungsör (SE)
(72) Inventor: Andersson, Thomas, 636 32 Kungsör (SE)
(74) Representative: Wennborg, Johan

(57) **Abstract**

Welding sleeve designed to be joined to at least one plastic pipe by means of electrically generated fusion, which welding sleeve comprises a fusible material (2) and an electrical conductor (3) with two terminals (5a, 5b) for connecting the conductor to a power source. The welding sleeve comprises at least one insulating device that can be fixed to the welding sleeve and that insulates the terminals (5a, 5b) from the environment outside the welding sleeve when in the fixed position. The invention also relates to a method for joining a welding sleeve to at least one plastic pipe.

## Description

### Technical field and background art

The invention relates to a welding sleeve designed to be joined to at least one plastic pipe by means of electrically-generated fusion. The welding sleeve can, for example, consist of a joining sleeve for joining two or more plastic pipes or can consist of an end sleeve designed to be joined to a single plastic pipe.

Welding sleeves are used, for example, for joining plastic pipes for transportation of petrol and other fuels at petrol stations. A simple type of welding sleeve designed to create a straight joint between two plastic pipes normally comprises an essentially cylindrical sleeve with an opening that passes right through in an axial direction. The sleeve comprises an outer layer with a stable shape and an inner layer of a fusible material. An electrical conductor in the form of a coil is wound in or around the inner layer. At both ends, the conductor has terminals or the like for connection to an external power source. The terminals are arranged on the outside of the sleeve to enable the power source to be connected easily.

For joining two plastic pipes, the end of each pipe is inserted into a respective end of the sleeve so that a part of each pipe end is located radially inside the coil. Following this, the power source is connected to the conductor. Due to the resistance that arises in the conductor, the inner fusible material is heated up, whereupon this material melts and is fused to the outer surface of the respective plastic pipe. After a certain period of time, the power source is disconnected, whereupon the material cools down. In this way, a leak-proof joint is achieved between the two pipes, which joint comprises the material that has fused with the outer surface of the pipes and the part of the sleeve that is between the fused material. The welding sleeve itself is thus part of the joint that has been made and this remains between the pipes when the pipes are in use after the joining operation has been completed.

WO99/46532 describes a similar type of welding sleeve that can be used to join double-wall pipes.

However, the welding sleeves described above and other previously-known welding sleeves are associated with problems. During the use of plastic pipes that are joined using such welding sleeves, liquid flows through the welding sleeves. The flowing liquid can give rise to an electrical field that charges up the capacitance comprising the electrical conductor arranged in the welding sleeve. The charging up of the electrical conductor can, in turn, cause electrical discharges via the terminals arranged on the outside of the welding sleeve. Particularly for applications in petrol stations or the like, where there can be combustible or explosive liquids and gases in close proximity to the pipes and the welding sleeves, such discharges constitute a considerable risk of causing serious explosions or fires.

### Disclosure of invention

An object of the invention is therefore to provide an improved welding sleeve designed to be joined to at least one plastic pipe.

Another object is to provide such a welding sleeve by means of which the abovementioned problems and risks can be reduced.

An additional object is to provide such a welding sleeve that is relatively cheap and simple to manufacture.

Yet another object is to provide such a welding sleeve that is safe to use.

These and other objects are achieved by a welding sleeve of the type described in the preamble to Claim 1 and that has the characteristics listed in the characterizing part of the claim.

The welding sleeve thus comprises a fusible material and an electrical conductor with two terminals for connecting the conductor to a power source. The electrical conductor and the fusible material are arranged in a previously-known way for joining the welding sleeve to at least one plastic pipe. According to the invention, the welding sleeve comprises at least one insulating device that can be fixed to the welding sleeve and that insulates the terminals from the environment outside the welding sleeve when in the fixed position. As the insulating device insulates the terminals from the environment, charges that arise in the electrical conductor are prevented from giving rise to electrical discharges between the terminals and the environment in a very simple and effective way. By this means, the risk is also reduced of sparks arising that can cause a fire or an explosion.

The invention also relates to a very simple method for safe joining a welding sleeve to at least one plastic pipe, in which method at least one insulating device is fixed to the welding sleeve after the power source has been disconnected in order to insulate the terminals from the environment, which insulation is preferably permanent.

Additional characteristics and advantages of the invention are apparent from the following detailed description and the patent claims.

### Brief description of drawings.

In the following, there is an exemplifying description of an embodiment of the invention, with reference to the figures, in which:
Figures 1a, 1b, and 1c are a perspective view, a plan view from the side and an end view respectively of a welding sleeve according to the invention.
Figure 2a is a partially sectioned side view of the welding sleeve shown in Figure 1a.
Figure 2b is a cross section that shows a part of the welding sleeve shown in Figure 2a.
Figure 3 is a partially sectioned plan view from the side of a component comprised in Figure 2b.

### Modes for carrying out the invention

The exemplifying welding sleeve according to the invention shown in the figures is a welding sleeve for creating a straight joint between two plastic pipes (not shown) arranged in line. The welding sleeve comprises an outer sleeve 1 of a material that enables the shape to be relatively stable, such as a plastic material. An inner sleeve 2 of a fusible plastic material is arranged concentrically inside the outer sleeve 1. The outer diameter of the inner sleeve is essentially the same as the inner diameter of the outer sleeve 1. The inner sleeve comprises a central limit flange 2a that projects radially inwards. An electrical conductor 3 in the form of a coil is wound around the inner sleeve and received in a groove 4 that is arranged in the outer surface of the inner sleeve 2. The electrical conductor 3 is connected at both its ends to terminals 5a, 5b for connecting an external power source (not shown) to the conductor 3. The two terminals 5a, 5b are fixed in the outer sleeve 1 and project radially outward from this. In addition, the two terminals are each arranged in a cylindrical boss 6a, 6b that projects radially outwards from the outer sleeve 1, which boss defines a cylindrical opening that is open to the outside.

During use of the welding sleeve, the ends of two plastic pipes (not shown) are inserted into the respective ends of the welding sleeve, so that they rest against respective sides of the limit flange 2a. The outer diameter of the plastic pipes is essentially the same as the inner diameter of the inner sleeve 2. Thereafter, the two poles of an external power source (not shown) are connected to the respective terminals 5a, 5b. When the power source is activated, a current flows through the conductor 3, which is heated up due to the resistance of the conductor 3. Accordingly, the inner sleeve 2 is also heated up, whereupon its fusible material fuses with the outer surfaces of the two plastic pipes.

When the fusion is completed, the external power source is disconnected from the two terminals 5a, 5b. In accordance with the invention, an insulating plug 7a, 7b is thereafter fixed by inserting it into the cylindrical boss 6a, 6b for each of the two terminals 5a, 5b.

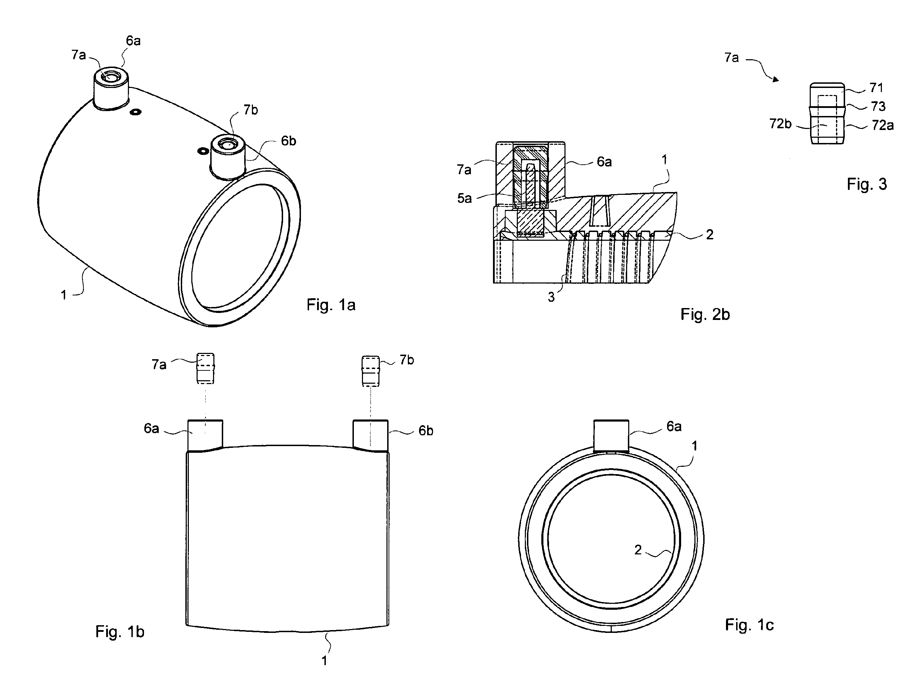

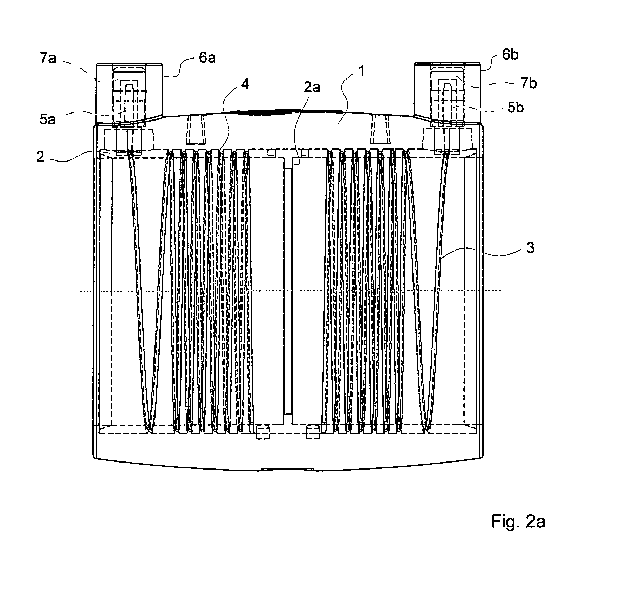

Figure 3 shows one insulating plug 7a. The insulating plug 7a is made of one piece of a polymer material providing relatively good electrical insulation. The insulating plug 7a comprises a solid circular end wall 71 facing upwards in the figures. An essentially cylindrical side wall 72a that is open at the bottom projects downwards from the end wall 71a and defines a cylindrical space 72b for receiving the terminal 5a (see Figure 2b). The cylindrical wall 72a has a lower part that tapers in a downwards direction to facilitate the insertion of the plug into the cylindrical boss 6a. Above this tapering part, there is a flange 73 that is in the form of a ring and projects radially outwards and tapers in a downward direction. The ring-shaped flange 73 comprises an upper pointed edge that defines the largest outer diameter of the plug. In this way, the ring-shaped flange 73 forms a hook- or barb-like engagement device which, after insertion into the cylindrical boss 6a, holds the insulating plug in its fixed position permanently as a result of its engagement with the inner wall of the boss 6a. Thus, after fixing, the plug can only be removed from the outer sleeve 1 of the welding sleeve with difficulty. By this means, the terminals are prevented from being exposed accidentally. The second insulating plug 7b is essentially identical to the insulating plug 7a described above.

In addition, the insulating plug is a colour that is different from that of the outer sleeve 1. By this means, during inspection of pipes and pipe joints, it is easy to ascertain that the welding sleeve has actually been welded and that the insulation is in place.

An exemplifying embodiment of the welding sleeve and the method according to the invention has been described above. The invention is not restricted to this description, but can be varied freely within the framework of the patent claims. For example, an insulating device in one piece can be designed to cover and thereby to insulate both or, where appropriate, all the terminals on the welding sleeve. Also when separate insulating plugs of the type described above are used for insulating individual terminals, the insulating plugs can be designed in a number of different ways. For example, the side wall of the plug can be designed in such a way that it is threaded onto the circular boss of the welding sleeve and for this purpose it has suitably inward-facing engagement devices. The side wall of the plug can be replaced by two or more shanks or the like that are inserted into or threaded onto the cylindrical boss.

The terminals can also be designed in a number of different ways and can, for example, consist of the ends of the conductors or of other connectors than the terminals described above.

The welding sleeve can also be designed for a number of different joint configurations, for example as an L-connection for two pipes, a T- or Y-connection for three pipes, an X-connection for four pipes or as an end connection for only one pipe.

## Claims

1. Welding sleeve designed to be joined to at least one plastic pipe by means of electrically generated fusion, which welding sleeve comprises a fusible material (2) and an electrical conductor (3) with two terminals (5a, 5b) for connecting the conductor to a power source, **characterized in that** there is at least one insulating device that can be fixed to the welding sleeve and that insulates the terminals (5a, 5b) from the environment outside the welding sleeve when in the fixed position.

2. Welding sleeve according to Claim 1, in which at least one terminal (5a, 5b) is arranged in a cylindrical opening that opens outwards and the insulating device comprises a plug (7a, 7b) that can be inserted into the opening.

3. Welding sleeve according to Claim 2, in which the plug (7a 7b) comprises an engagement device (73) that is designed to prevent removal of the plug after fixing by engaging with a cylindrical wall that surrounds the opening.

4. Welding device according to claim 3, wherein the engagement device (73) comprises a ring-shaped flange forming a hook or barb.

5. Welding sleeve according to any one of Claims 1-4, comprising a separate insulating device for each terminal.

6. Welding sleeve according to any one of Claims 1-4, in which one and the same insulating device is designed to insulate two or more terminals when in the fixed position.

7. Welding sleeve according to any one of Claims 1-6, in which the insulating device has a colour that is different from that of the outside of the rest of the welding sleeve.

8. Method for joining a welding sleeve to at least one plastic pipe, which welding sleeve comprises a fusible material (2) and an electrical conductor (3) that has two terminals (5a, 5b), which method comprises inserting at least one plastic pipe into an opening in the welding sleeve, connecting an electrical power source to the terminals in order to fuse the fusible material to the plastic pipe by resistive heating up of the conductor, and disconnecting the power source, **characterized in that** at least one insulating device is fixed to the welding sleeve, after disconnection of the power source, in order to insulate the terminals from the environment outside the welding sleeve.
